(19) **Europäisches Patentamt European Patent Office Office européen des brevets**

(11) **EP 4 625 365 B1**

(12) ## EUROPEAN PATENT SPECIFICATION

(45) Date of publication and mention
of the grant of the patent:
**29.04.2026   Bulletin 2026/18**

(21) Application number: **25165400.0**

(22) Date of filing: **21.03.2025**

(51) International Patent Classification (IPC):
***G06V 20/68*** *(2022.01)*      ***A23F 3/06*** *(2006.01)*

(52) Cooperative Patent Classification (CPC):
**G06V 20/68; A23F 3/06**

(54) **METHOD AND SYSTEM FOR WITHERING SCHEDULE PREDICTION OF TEA LEAVES**

VERFAHREN UND SYSTEM ZUR VORHERSAGE DES VERWELKENS VON TEEBLÄTTERN

PROCÉDÉ ET SYSTÈME DE PRÉDICTION DU FLÉTRISSEMENT DE FEUILLES DE THÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.03.2024   IN 202421024483**

(43) Date of publication of application:
**01.10.2025   Bulletin 2025/40**

(73) Proprietor: **Tata Consultancy Services Limited Mumbai, Maharashtra 400 021 (IN)**

(72) Inventors:
- **KUMAR, Abhishek**
  **411057 Pune, Maharashtra (IN)**
- **BOSE CHOUDHURY, Swagatam**
  **400601 Thane (W), Maharashtra (IN)**
- **JUNAGADE, Sanket Kailas**
  **400601 Thane (W), Maharashtra (IN)**
- **SARANGI, Sanat**
  **400601 Thane (W), Maharashtra (IN)**
- **SINGH, Dineshkumar Jang Bahadur**
  **400601 Thane (W), Maharashtra (IN)**
- **PAPPULA, Srinivasu**
  **500081 Hyderabad, Telangana (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CN-A- 111 524 092      CN-A- 119 045 397**

- **DAS NIPAN ET AL: "Prediction of Moisture Loss in Withering Process of Tea Manufacturing Using Artificial Neural Network", IEEE TRANSACTIONS ON INSTRUMENTATION AND MEASUREMENT, vol. 67, no. 1, 1 January 2018 (2018-01-01), USA, pages 175 - 184, XP093280756, ISSN: 0018-9456, DOI: 10.1109/TIM.2017.2754818**
- **KUMAR ABHISHEK ET AL: "Towards Precision Withering in Tea Factories with Non-Invasive Leaf Moisture Estimation", 2024 16TH INTERNATIONAL CONFERENCE ON COMMUNICATION SYSTEMS & NETWORKS (COMSNETS), IEEE, 3 January 2024 (2024-01-03), pages 177 - 182, XP034547556, DOI: 10.1109/ COMSNETS59351.2024.10427332**

**Description**

CROSS-REFERENCE TO RELATED APPLICATIONS AND PRIORITY

The present application claims priority to Indian application no. 202421024483, filed on March 27, 2024.

TECHNICAL FIELD

The disclosure herein generally relates to image processing, and, more particularly, to a method and system for withering schedule prediction of tea leaves based on image analysis and machine learning models.

BACKGROUND

The intricate process of tea production encompasses several stages, and among them, withering stands out as a pivotal initial step. Withering, crucial for moisture extraction from tea leaves, plays a key role in diminishing their weight and enhancing flexibility for subsequent processing. Precise control of this stage bears substantial influence on the ultimate quality of tea, particularly in terms of flavor and aroma.

Das, N., et al., "Prediction of moisture loss in withering process of tea manufacturing using artificial neural network," IEEE Transactions on Instrumentation and Measurement, vol. 67, no. 1, pp. 175-184, Jan. 2018, doi: 10.1109/TIM.2017.2754818 discloses an artificial neural network model to accurately predict moisture loss during the tea withering process, supporting better control and optimization of tea manufacturing.

However, the monitoring and control of withering process poses various challenges. Some of the challenges are listed here. 1. Slow Withering Process Monitoring: Tea withering takes a long time (upto 16 hours) to reach the desired moisture level. Estimating when it is time to move to the next step to reach the target tea leaf moisture is difficult and inefficient. 2. Time-Consuming Moisture determination: Checking leaf moisture using a microwave oven is a tedious process (which takes about 15 minutes), and is a destructive process. So, most of the time, less precise methods are used. 3. Managing Multiple Withering Troughs: In a tea factory, when multiple withering troughs (usually 20+) are close to the target moisture level (LT), using a shared microwave oven for testing becomes too slow and complicated. 4. Real-time Monitoring Difficulties: Lack of procedure for accurately and quickly monitor the moisture levels in multiple troughs, especially when they are near the critical LT point, which delays moving the tea leaves to the next processing stage.

SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via one or more hardware processors, a) a plurality of captured images of a plurality of tea leaves, and b) historical data on cycle-wise withering details of the plurality of tea leaves from a plurality of sources, as input, wherein the historical data is with respect to a plurality of parameters comprising moisture percentage present in the tea leaves at a plurality of time stamps, and associated room temperature and relative humidity; preprocessing the input data, via the one or more hardware processors, to generate a pre-processed data; estimating, by processing the pre-processed data using a trained moisture percentage estimation model via the one or more hardware processors, a moisture percentage in the plurality of tea leaves, for a selected time stamp; and generating, by a trained time series forecasting model via the one or more hardware processors, a withering schedule for the plurality of tea leaves, based on a) the estimated moisture percentage, b) current temperature value, c) current relative humidity value, and d) a current timestamp.

In an embodiment of the method, the predicted withering schedule is fine-tuned, via the one or more hardware processors, by: performing a course correction of impact of deviation in one or more ambient parameters on the withering schedule; determining whether impact of the course correction on remaining withering schedule is within a defined threshold; and re-generating the withering schedule if the impact is determined as exceeding the defined threshold.

In an embodiment of the method, the moisture percentage estimation model is trained to generate the prediction with respect to the moisture percentage, by: receiving a plurality of spectral images of a plurality of reference tea leaves captured using a spectral camera device; preprocessing the received plurality of spectral images of the plurality of tea leaves to generate a preprocessed spectral data; extracting a foreground data from the preprocessed data, wherein the foreground data comprises a plurality of target areas of the plurality of reference tea leaves in the plurality of spectral images; transforming the foreground data of each of the plurality of reference tea leaves to an image matrix; extracting one or more bounding boxes from the image matrix using a bounding box classifier; estimating mean of pixel values associated with each of the plurality of reference tea leaves, for each of a plurality of bands in the preprocessed spectral data, by overlaying each of the one or more bounding boxes on the spectral image of each of the plurality of tea leaves; mapping the mean of pixels values with a moisture percentage; and training the moisture percentage estimation model with the mean of pixels values and the mapped moisture percentage, to generate the trained moisture percentage estimation model.

In another embodiment, a system is provided. The system includes one or more hardware processors, a communication interface, and a memory storing a plurality of instructions. The plurality of instructions cause the one or more hardware processors to: receive a) a plurality of captured images of a plurality of tea leaves, and b) historical data on cycle-wise withering details of the plurality of tea leaves from a plurality of sources, as input, wherein the historical data is with respect to a plurality of parameters comprising moisture percentage present in the tea leaves at a plurality of time stamps, and associated room temperature and relative humidity; preprocess the input data to generate a pre-processed data; estimate by processing the pre-processed data using a trained moisture percentage estimation model, a moisture percentage in the plurality of tea leaves, for a selected time stamp; and generate by a trained time series forecasting model, a withering schedule for the plurality of tea leaves, based on a) the estimated moisture percentage, b) current temperature value, c) current relative humidity value, and d) a current timestamp.

In an embodiment of the system, the one or more hardware processors are configured to fine-tune the predicted withering schedule, by: performing a course correction of impact of deviation in one or more ambient parameters on the withering schedule; determining whether impact of the course correction on remaining withering schedule is within a defined threshold; and re-generating the withering schedule if the impact is determined as exceeding the defined threshold.

In another embodiment of the system, the one or more hardware processors are configured to train the moisture percentage estimation model to estimate the moisture percentage, by: receiving a plurality of spectral images of each of the plurality of reference tea leaves captured using a spectral camera device; preprocessing of the received plurality of spectral images of the plurality of reference tea leaves to generate a preprocessed spectral data; extracting a foreground data from the preprocessed data, wherein the foreground data comprises of a plurality of target areas of the plurality of reference tea leaves in the plurality of spectral images; transforming the foreground data of each of the plurality of reference tea leaves to an image matrix; extracting one or more bounding boxes from the image matrix using a bounding box classifier; estimating mean of pixel values associated with each of the plurality of reference tea leaves, for each of a plurality of bands in the preprocessed spectral data, by overlaying each of the one or more bounding boxes on the spectral image of each of the plurality of reference tea leaves; mapping the mean of pixel values with a moisture percentage; and training the moisture percentage estimation model with the mean of pixel values and the mapped moisture percentage, to generate the trained moisture percentage estimation model.

In yet another embodiment, a non-transitory computer readable medium is provided. The non-transitory computer readable medium includes a plurality of instructions, which when executed, cause one or more hardware processors to: receive a) a plurality of captured images of a plurality of tea leaves, and b) historical data on cycle-wise withering details of the plurality of tea leaves from a plurality of sources, as input, wherein the historical data is with respect to a plurality of parameters comprising moisture percentage present in the tea leaves at a plurality of time stamps, and associated room temperature and relative humidity; preprocess the input data to generate a pre-processed data; estimate by processing the pre-processed data using a trained moisture percentage estimation model, a moisture percentage in the plurality of tea leaves, for a selected time stamp; and generate by a trained time series forecasting model, a withering schedule for the plurality of tea leaves, based on a) the estimated moisture percentage, b) current temperature value, c) current relative humidity value, and d) a current timestamp.

In an embodiment of the non-transitory computer readable medium, the one or more hardware processors are configured to fine-tune the predicted withering schedule, by: performing a course correction of impact of deviation in one or more ambient parameters on the withering schedule; determining whether impact of the course correction on remaining withering schedule is within a defined threshold; and re-generating the withering schedule if the impact is determined as exceeding the defined threshold.

In another embodiment of the non-transitory computer readable medium, the one or more hardware processors are configured to train the moisture percentage estimation model to estimate the moisture percentage, by: receiving a plurality of spectral images of each of the plurality of reference tea leaves captured using a spectral camera device; preprocessing of the received plurality of spectral images of the plurality of reference tea leaves to generate a preprocessed spectral data; extracting a foreground data from the preprocessed data, wherein the foreground data comprises of a plurality of target areas of the plurality of reference tea leaves in the plurality of spectral images; transforming the foreground data of each of the plurality of reference tea leaves to an image matrix; extracting one or more bounding boxes from the image matrix using a bounding box classifier; estimating mean of pixel values associated with each of the plurality of reference tea leaves, for each of a plurality of bands in the preprocessed spectral data, by overlaying each of the one or more bounding boxes on the spectral image of each of the plurality of reference tea leaves; mapping the mean of pixel values with a moisture percentage; and training the moisture percentage estimation model with the mean of pixel values and the mapped moisture percentage, to generate the trained moisture percentage estimation model.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for predicting a withering schedule for tea leaves, according to some embodiments of the present disclosure.

FIG. 2 is a flow diagram depicting steps involved in the process of predicting the withering schedule for tea leaves, using the system of FIG. 1, according to some embodiments of the present disclosure.

FIG. 3 is a flow diagram depicting steps involved in the process of fine-tuning the predicted withering schedule for tea leaves, using the system of FIG. 1, according to some embodiments of the present disclosure.

FIGS. 4A and 4B (collectively referred to as FIG. 4) is a flow diagram depicting steps involved in the process of training a moisture percentage estimation model to generate prediction with respect to moisture percentage in a plurality of tea leaves, using the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Monitoring and control of withering process poses various challenges. Some of the challenges are listed here. 1. Slow Withering Process Monitoring: Tea withering takes a long time (upto 16 hours) to reach the desired moisture level. Estimating when it is time to move to the next step to reach the target tea leaf moisture is difficult and inefficient. 2. Time-Consuming Moisture determination: Checking leaf moisture using a microwave oven is a tedious process (which takes about 15 minutes), and is a destructive process. So, most of the time, less precise methods are used. 3. Managing Multiple Withering Troughs: In a tea factory, when multiple withering troughs (usually 20+) are close to the target moisture level (LT), using a shared microwave oven for testing becomes too slow and complicated. 4. Real-time Monitoring Difficulties: Lack of procedure for accurately and quickly monitor the moisture levels in multiple troughs, especially when they are near the critical LT point, which delays moving the tea leaves to the next processing stage.

In order to address these challenges, method and system disclosed herein provide an approach of withering schedule monitoring in which the system, by performing a spectral data analysis on a plurality of spectral images of a plurality of tea leaves, estimated a moisture percentage in the plurality of tea leaves, for a selected time stamp. Further, based on the estimated moisture level, a current temperature value, a current relative humidity value, and a current time stamp, the system generates a withering schedule for the plurality of tea leaves. The generated withering schedule maybe fine-tuned based on a course correction of an impact of deviation in one or more ambient parameters on the prediction of the withering schedule.

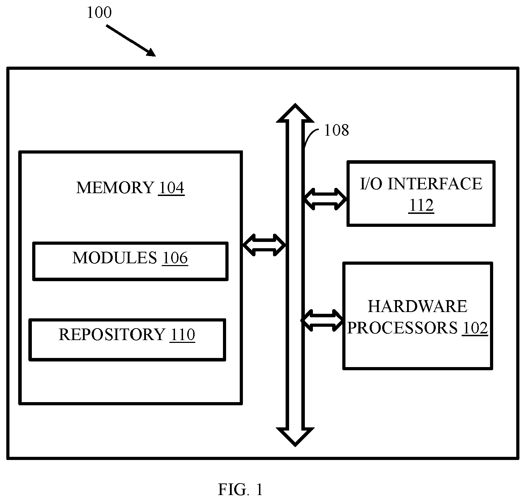

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary system for withering schedule prediction, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the withering schedule prediction being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the withering schedule prediction.

The data repository (or repository) 110 may include a plurality of abstracted piece of code for refinement and data that is processed, received, or generated as a result of the execution of the plurality of modules in the module(s) 106.

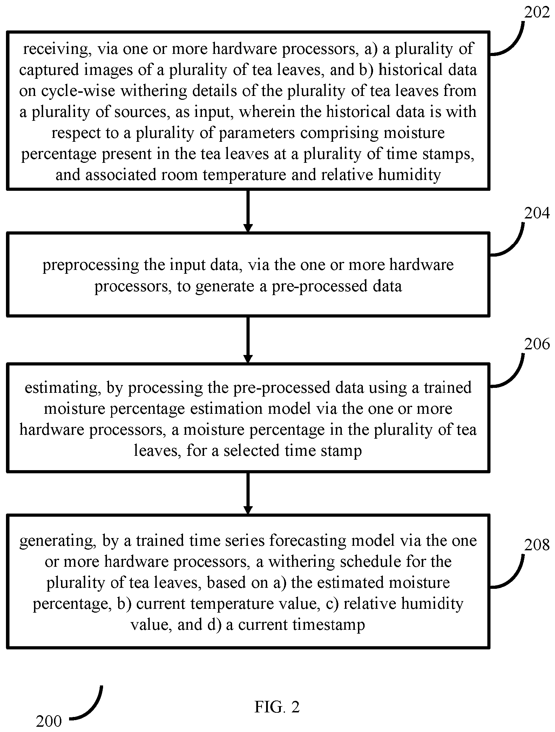

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2, FIG. 3, and FIG. 4.

FIG. 2 is a flow diagram depicting steps involved in the process of predicting the withering schedule for tea leaves, using the system of FIG. 1, according to some embodiments of the present disclosure. In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIGS. 2, 3, and 4. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of method 200 in FIG. 2, the system 100 receives, via the one or more hardware processors 102, a) a plurality of captured images of a plurality of tea leaves, and b) historical data on cycle-wise withering details of the plurality of tea leaves from a plurality of sources, as input. The historical data is with respect to a plurality of parameters comprising moisture percentage present in the tea leaves at a plurality of time stamps, and associated room temperature and relative humidity, captured over a plurality of past time instances. The system 100 may collect the input automatically, using appropriate input means. For example, the system 100 captures the image of the plurality of tea leaves using a spectral camera. Similarly, information on the room temperature and relative humidity at different timestamps are collected using one or more appropriate sensors deployed at a location where the withering is taking place, and the collected information on the room temperature and relative humidity, and the associated time stamps are communicated to the system 100 via appropriate interface(s) provided by the communication interface 112.

Further, at step 204 of the method 200, the system 100 preprocesses the input data, via the one or more hardware processors 102, to generate a pre-processed data. The preprocessing step maybe carried out to classify and save the input data based on time intervals. Steps that maybe executed as part of the preprocessing of the input data are:

a) Outlier Identification and T-Interval Calculation: This step identifies significant gaps or jumps in the time series data and calculates a representative time interval (T) between data points, excluding outliers. T interval, which is the median of the time differences between consecutive tuples in the input data. However, this may not be accurate if there are outliers in the data that have very large or very small time differences. So, the system 100 omits the outlier data using appropriate techniques, for example, interquartile range (IQR) method. The IQR is the difference between the

75th percentile and the 25th percentile of a sorted list of values. Any value that is more than 1.5 times the IQR above the 75th percentile or below the 25th percentile is considered an outlier, which are then filtered out from the list of time differences before finding the median. Algorithm for this process is given as:

**Input:**

**data**: Time series data with timestamps (Timestamp) in Table

**Output:**

**t_interval:** Time interval in secs

**outlier_count:** Number of outliers

**Algorithm:**

**Validate data:**

Check if timestamps are valid (Timestamp)

Ensure at least two data points

**Calculate time differences:**

Compute differences between consecutive timestamps in the data.

**Convert to seconds:**

Express time differences in seconds

**Calculate percentiles and IQR:**

Find 25th and 75th percentiles of time differences (q1 and q3)

Calculate Interquartile Range (IQR) as q3 - q1

**Define outlier threshold:**

Set threshold as 1.5 times IQR (seconds)

**Identify outliers:**

Identify timestamps with differences outside the range:

less than q1 - threshold or

greater than q3 + threshold

**Calculate outlier count and T-interval:**

Count identified outliers (outlier_count)

Find the median of time differences excluding outliers as T-

interval (seconds)

**Return:**

**t_interval, outlier_count**

b) Classifying Data based on timestamp for T Intervals: This step takes time series data and applies the T interval to classify each data point based on its proximity to the previous and next data points. This helps to identify meaningful data points within each T interval. At this step, the system 100 uses a function F to perform the classification. For each pair of consecutive tuples, the system 100 compares an absolute difference between respective date-time pairs with n% of the T interval. If the difference is greater than or equal to $nT,$ the system 100 assigns the timestamp of a second tuple as the classified time. Otherwise, the system 100 assigns the date-time of the first tuple as the classified time. Here, $n = f(t, H)$. Pseudocode for this process is given as:

**Input:**

**data**: Time series data with timestamps (**Timestamp**)

**T:** t_interval in secs

**n**: Percentage (0-1) for calculating nT threshold

**Output:**

    **data**: Modified Table with "new_**timestamp**" column for classified timestamps

**Algorithm:**

    **Calculate nT threshold:**

        $nT = T * n$

    **Calculate differences:**

        For each data point:

            Find the difference to the next timestamp ("diff_next")

            Find the difference from the previous timestamp ("diff_prev")

    **Apply classification function (F):**

        For each data point:

            Apply function F to **diff_prev, current**_timestamp, **diff_next,** and

            **nT**

            Store the classified timestamp ("new_timestamp") in the

            "new_timestamp" column

    **Remove temporary columns:**

        Drop "diff_prev" and "diff_next" columns

    **Return:**

        Modified data with "new_timestamp" column

**Calculation of 'n' :**

**Inputs:**

- actual_temperature: Room temperature in degrees Celsius
- ideal_temperature_min: Minimum ideal temperature (e.g., 20°C)
- ideal_temperature_max: Maximum ideal temperature (e.g., 25°C)
- actual_relative humidity: Relative humidity in percentage

- ideal_relative humidity_min: Minimum ideal relative humidity (e.g., 40%)
- ideal_relative humidity_max: Maximum ideal relative humidity (e.g., 60%)

**Output:**

- $0 < n < 1$

**Algorithm:** • **Normalize temperature:** normalized_temperature = (actual_temperature - ideal_temperature_min) / (ideal_temperature_max - ideal_temperature_min) • **Normalize relative humidity:** normalized_relative humidity = (actual_relative humidity - ideal_relative humidity_min) / (ideal_relative humidity_max - ideal_relative humidity_min) • **Calculate score using Pythagoras theorem:**

$$n = \text{sqrt}((\text{normalized\_temperature})^2 + (\text{normalized\_relative humidity})^2)$$

c) Determine Timestamp with NA values and flag them: At this step, the system 100 analyzes the classified data and applies a scoring mechanism on each T interval timestamp based on the percentage of missing values (MVC%). If the MVC% exceeds a user-defined threshold, the entire T interval timestamp is flagged as REJECT, suggesting unreliable data within that period else it would be flagged HANDLE. Pseudocode for this process is given as:

**Input:**

> **data**: Table with "new_timestamp", "m%", "temp" (t) and "relative humidity"
>
> (H) columns, potentially with missing values

> x: Threshold percentage (0-100) for rejecting cycles with high missing values

**Output:**

**data**: Modified Table with an additional "score" column (**"REJECT"** or

"**HANDLE**")

**Algorithm: Calculate missing values per cycle:** For each data point: Count the number of missing values in the row (**"missing_values"**) **Define the total number of values per cycle:** Determine the total number of columns in the Table (**"total_values"**) **Calculate the missing value percentage per cycle:** Calculate the percentage of missing values per cycle (**"MVC%"**):

$$MVC\% = (missing\_values / total\_values) * 100$$

**Apply scoring mechanism:** For each data point: If MVC% is greater than x: Set "score" to **"REJECT"** Otherwise: Set "score" to **"HANDLE" Return:** Modified data with additional column **"score"**

d) Handling Missing Data: At this step, the system 100 handles missing values within flagged T intervals. This process involves handling missing M% values with linear interpolation and missing values of temperature (t) and relative humidity (H) with Exponential Moving Average (EMA) based approaches to smoothen the time series. Pseudocode representation of this step is given below:

**Input:**

**data**: Table with columns:

**new_timestamp:** Timestamps classified by C2

**temperature**: Temperature values

**relative humidity**: Relative humidity values

**score**: "**REJECT**" or "**HANDLE**" from C3

**m**: The M% threshold for missing values

**alpha**: The smoothing factor for EMA (between 0 and 1)

**Output:**

data: Modified Table with filled "**M%**", "**temperature**" and "**relative humidity**" column using interpolation and/or EMA

**Algorithm:**

**Select data for handling:**

Filter data for rows with "**HANDLE**" score:

**Linear Interpolation for M%:**

For each group in **handle_data** with missing values:

Identify gaps between non-missing values

For each gap:

Find the slope (m) and intercept (c) of the line connecting adjacent non-missing values

Use the linear equation $Y = mx + c$ to interpolate missing values for "**M%**"

**Exponential Moving Average for remaining missing values**

**of temperature (t) and relative humidity (H):**

For each group in handle_data with remaining missing values:

For each missing value:

Calculate the EMA using the formula:

$$EMA\_t = (α * Temp) + ((1 - α) * EMA\_(t-1))$$

Where:

**EMA_t:** Estimated temperature at time t

**Temp:** Nearest non-missing temperature/ relative humidity value

**α:** Smoothing factor (between 0 and 1)

**EMA_(t-1)**: Previous EMA value (or first non-missing value)

**Merge data:**

Combine the processed **"HANDLE"** data back to the original Table

**Return:**

Modified data with filled "**M%**", "**temperature**" and "**relative humidity**" values using interpolation and/or EMA

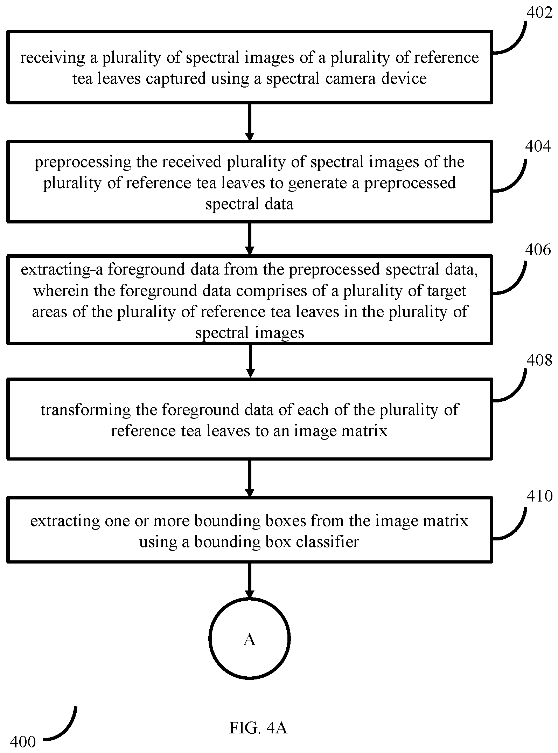

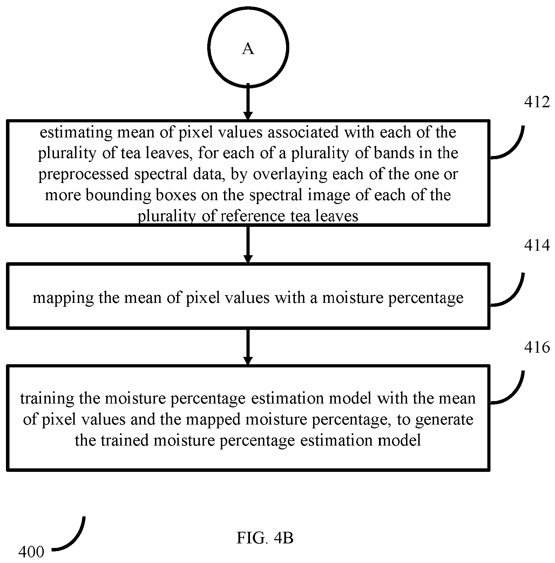

Further, at step 206 of the method 200, the system 100 estimates, by processing the pre-processed data using a trained moisture percentage estimation model via the one or more hardware processors 102, moisture percentage in the plurality of tea leaves, for a selected time stamp. Various steps involved in the process of training the moisture percentage estimation model are depicted in method 400 in FIG. 4, and are explained hereafter.

At step 402 of the method 400, the system 100, receives a plurality of spectral images of a plurality of reference tea leaves captured using a spectral camera device. In an embodiment, during the training of the moisture percentage estimation model, the system 100 may be considered to be in a training phase. The plurality of spectral images is captured in one or more file formats, for example,.raw,.hdr, and.jpg, with corresponding spectral bands.

At step 404 of the method 400, the system 100 performs preprocessing of the received plurality of spectral images of the plurality of tea leaves to generate a preprocessed spectral data. The system 100 may perform grey-scale conversion, image blurring, and clustering one or more clustering algorithms, as part of the pre-processing of the spectral image. The grey-scale conversion assigns pixel values in the captured image to grey-scale values where each pixel is described by a single value, typically ranging from 0 (black) to 255 (white). For smoothening of grey-scaled image, Gaussian blur maybe used which reduces high-frequency details and transitions, making the image look softer.

Further, at step 406 of the method 400, the system 100 extracts a foreground data from the preprocessed data. The foreground data includes a plurality of target areas of the plurality of reference tea leaves in the plurality of spectral images. Major part of each of the plurality of spectral images may be of areas surrounding the reference tea leaves, hence processing the entire image maybe unnecessary and adds to computational overhead. To avoid this, the foreground extraction is performed, such that the foreground data includes images of the plurality of reference tea leaves. The system 100 may cluster the grey-scaled blurred image using a Clustering algorithm-1 for an initial segmentation. Here, K = 2 in algorithm means clustering the sea of pixel associated with tea leaves as one cluster and other cluster to sea of pixel associated to surface. Further, the system 100 may use a Clustering algorithm-2, where a circular mask is created around the image to isolate the central region from noisy edges. The mask is black where the pixels are to be excluded and white where the pixels are to be included. Only the pixels within the mask are used for Clustering algorithm-2. This means the clustering only affects the central area of the image and ignores the potentially noisy edges. The radius of the mask is automatically calculated as half the minimum dimension of the image. This ensures the mask fits entirely within the image and doesn't accidentally exclude a portion of the central region. This process removes the additional noise (highly sensitive areas) created by the camera at the edges of the image.

Further, at step 408 of the method 400, the system 100 transforms the foreground data of each of the plurality of tea leaves in a an image matrix.

Further, at step 410 of the method 400, the system 100 extracts one or more bounding boxes from the image matrix using a bounding box classifier. Pseudocode of the process used by the bounding box classifier for extracting the one or more bounding boxes is given below:

```
<START>

Input:

  • `image`: Segmented image (BImin=0, BImax=1)
  • `window_size`: Size of sliding window (width, height)
Output:
  • bounding_boxes`: List of bounding boxes for detected objects


1. Pad image:
Add padding to image with `window_size // 2` on each side
Use constant value of 0 for padding


2. Iterate over image:
For each pixel at (x, y):
Check if within image boundaries:
x >= window_size[0] and x < image_width - window_size[0]
y >= window_size[1] and y < image_height – window_size[1]
```

*3. **Extract window:***

*Define window coordinates:*

*x_min = x - window_size[0] // 2*

*y_min = y - window_size[1] // 2*

*x_max = x + window_size[0] // 2*

*y_max = y + window_size[1] // 2*

*Extract window from padded image:*

*window = padded_image[y_min:y_max+1, x_min:x_max+1]*


*4. **Check window pixels:***

*Check if all pixels in the window have value BImax (1)*


*5. **Detect object:***

*If all pixels are BImax:*

*Add bounding box to list:*

*bounding_boxes.append(((x_min, y_min), (x_max, y_max)))*


*6. R**eturn bounding boxes:***

*Return `bounding_boxes`*

*<END>*

Further, at step 412 of the method 400, the system 100 estimates mean of pixels value associated with each of the plurality of reference tea leaves, for each of a plurality of bands in a spectral data, by overlaying each of the one or more bounding boxes on the spectral image of each of the plurality of reference tea leaves. Further, at step 414 of the method 400, the system 100 maps the mean of pixels values with a moisture percentage. Further, at step 416 of the method 400, the system 100 trains the moisture percentage estimation model with the mean of pixel values (mean pixel values are alternately referred to as reflectance values) and the mapped moisture percentage, to generate the trained moisture percentage estimation model. In this training process, the pixel values against features bands and M% from traditional methods (ovendry method etc.) are used for training the moisture percentage estimation model. Here, supervised learning based regression model is used to estimate the moisture and the estimated model weights are saved for estimation. In this process, the system 100 performs automatic identification of target spectral signature in each of the plurality of spectral images of the plurality of reference tea leaves, i.e., the tea leaves under test, and estimates moisture percentage from the associated target spectral signatures where the spectral signature comprising reflectance values across multiple wavelength bands. This process involves:

- Spectral Sample Amplification
- Moisture % estimation

These steps are further explained below:

Spectral Sample Amplification :

In a withering setup, when tea leaves for withering comes in withering trough, a spectral device mounted overhead of trough under specific conditions (closed lighted area) is activated, and. Here, one of the spectral bands.jpg file goes under a series of pre-processing operations which may include grey-scale conversion, image blurring, and one or more clustering algorithms.

- The grey-scale conversion assigns pixel values in the captured image to grey-scale values where each pixel is described by a single value, typically ranging from 0 (black) to 255 (white). For smoothening of grey-scaled image, Gaussian blur maybe used which reduces high-frequency details and transitions, making the image look softer.
- To separate the tea leaves (foreground) from surface (background), we cluster the grey-scaled blurred image using a Clustering algorithm-1 for initial segmentation. Here, K = 2 in algorithm means clustering the sea of pixel associated with tea leaves as one cluster and other cluster to sea of pixel associated to surface.
- Clustering algorithm-2 is used where a circular mask is created around the image to isolate the central region from noisy edges. The mask is black where we want to exclude pixels and white where we want to include them. Only the pixels within the mask are used for Clustering algorithm-2. This means the clustering only affects the central area of the image and ignores the potentially noisy edges. The radius of the mask is automatically calculated as half the minimum dimension of the image. This ensures the mask fits entirely within the image and doesn't accidentally exclude a portion of the central region. This process removes the additional noise (highly sensitive areas) created by the camera at the edges of the image.

The output of above mentioned series processing operations come out as image matrix having binary details. Furthermore, Bounding Box Classifier is used for bounding box extraction over image matrix. It evaluates whether the content within the current window matches the object being sought (here, one of the binary data for tea leaves region over image is taken into consideration) or not.

Pseudo Code for Bounding Box Classifier for Segmented Image

*<START>*

*Input:*

- *`image`: Segmented image (BImin=0, BImax=1)*
- *`window_size`: Size of sliding window (width, height)*

*Output:*

- *bounding_boxes`: List of bounding boxes for detected objects*

*1. Pad image:*

*Add padding to image with `window_size // 2` on each side*

*Use constant value of 0 for padding*

*2. Iterate over image:*

*For each pixel at (x, y):*

*Check if within image boundaries:*

*x >= window_size[0] and x < image_width - window_size[0]*

*y >= window_size[1] and y < image_height – window_size[1]*

*3. Extract window:*

*Define window coordinates:*

*x_min = x - window_size[0] // 2*

*y_min = y - window_size[1] // 2*

*x_max = x + window_size[0] // 2*

*y_max = y + window_size[1] // 2*

*Extract window from padded image:*

*window = padded_image[y_min:y_max+1, x_min:x_max+1]*

*4. Check window pixels:*

*Check if all pixels in the window have value BImax (1)*

*5. Detect object:*

*If all pixels are BImax:*

*Add bounding box to list:*

*bounding_boxes.append(((x_min, y_min), (x_max, y_max)))*

*6. Return bounding boxes:*

*Return `bounding_boxes`*

*<END>*

The extracted regions/pixel locations from the classifier is saved and used for further analysis. These pixel locations are superimposed on.raw file (as file shape maybe.jpg), which gives a hypercube information present in extracted pixel locations in terms of reflectance values against specified spectral bands. These reflectance values are in numerical form. The mean value of all reflectance values over different pixel locations in one image, is calculated and maybe saved. Further, dimensionality reduction is done using appropriate technique such as PCA (Principle Component Analysis) to make the process less computationally complex. As output of this process, relevant features bands are generated.
Terms used are:

BI_min: Minimum threshold for segmented object
BI_max: Maximum threshold for segmented object
Bounding Box Classifier: Sliding Window Classifier (Determine Fixed sized Bounding Box for BI max over the Image matrix)

Moisture percentage (%) estimation:

The reflectance values against features bands and moisture percentage (which may have been obtained using traditional methods such as oven-dry method) are used for training the moisture percentage estimation model. Supervised learning based regression model maybe used to estimate the moisture % and the estimated model weights are then saved in an associated database for estimation.

Further, at step 208 of the method 200, the system 100 predicts, by a trained time series forecasting model via the one or more hardware processors 102, a withering schedule for the plurality of tea leaves, based on a) the estimated moisture percentage, b) current temperature value, c) current relative humidity value, and d) a current timestamp.

Pseudo Code for generating the withering schedule is given below. It is to be noted that the pseudocode refers to use of specific neural network models such as SAN_Transformer. However, this is for explanation purpose, but in actual implementation this maybe done using any other suitable RNN/LSTM/any other neural network models.

**a. Define Input Parameters:**

**Input_sequences:** A sequence of input features (room temperature, relative humidity, and moisture percentages of tea leaves) with shape (batch_size, sequence_length, input_size)

Here, sequence_length is defined by the number of time-stamps at (t_interval) in each day. For example, if t_interval = 1800 sec, then the total sequence length for each day starts at 11:00 a.m. and ends at 11:30 p.m. is 25.

Batch size is defined as the collective number of sequence lengths (number of days). For example, if you forecast 1 year of data and have 10 years of historical data, the batch size is 365.

Input_size defined total data in the database. (25 *365*10=91250)

In the embodiments disclosed herein, the forecasting is done only for each day of data. Hence, batch size used is 25. Hence the total shape based on the above example is (25, 25, 91250). Calculation of n value used herein is elaborated in step 204 of the method 200.

**initial_moisture:** The initial moisture percentage for the current day, with shape (batch_size, 1)

**b. Define Output Parameter:**

**forecasted_moisture:** The forecasted moisture percentages for the entire day, with shape (batch_size, output_sequence_length)

**c. Define Model:**

**SAN_Transformer:**

**Input:** input_size, output_size, num_layers, num_heads, dropout

**Initialize**:

encoder = TransformerEncoder(

TransformerEncoderLayer(input_size, num_heads, dropout),

num_layers

)

decoder = Linear(input_size, output_size)


**Forward**:

combined_input = Concatenate(input_sequences, initial_moisture)

encoded_representations = encoder(combined_input)

mean_representation = Mean(encoded_representations, dim=1)

output = decoder(mean_representation)

return output


**Define Training Function:**

Input: model, train_loader, val_loader, epochs, learning_rate, device


Move model to device

Initialize loss function (MSELoss)

Initialize optimizer (Adam with model parameters and learning_rate)

```
for epoch in range(epochs):
Initialize train_loss and val_loss

# Training Loop
Set model to train mode
for input_sequences, initial_moisture, targets in train_loader:
Move input_sequences, initial_moisture, and targets to device
Zero out gradients
outputs = model(input_sequences, initial_moisture)
loss = loss_function(outputs, targets)
Backpropagate loss
Update model parameters using optimizer
Accumulate train_loss

# Validation Loop
Set model to evaluation mode
with no_grad():
for input_sequences, initial_moisture, targets in val_loader:
Move input_sequences, initial_moisture, and targets to device
outputs = model(input_sequences, initial_moisture)
loss = loss_function(outputs, targets)
Accumulate val_loss

Compute average train_loss and val_loss
Print epoch, train_loss, and val_loss

return trained_model
```

# Example Usage

Define input_size, output_size, sequence_length, output_sequence_length, num_layers, num_heads, learning_rate, epochs, device

Assuming train_loader and val_loader are available, providing input_sequences, initial_moisture, and targets

#Initialize model

**Call Training Function**:

trained_model = train(

model,

train_loader,

val_loader,

epochs,

learning_rate,

device

)

# Use trained_model for inference

forecasted_moisture = trained_model(input_sequences, initial_moisture)

This pseudocode is further explained below:

1. **Define Input Parameters:**

- input_sequences: A sequence of input features (room temperature, relative relative humidity, and moisture percentages) with shape (batch_size, sequence_length, input_size).
- initial_moisture: The initial moisture percentage for the current day, with shape (batch_size, 1).

2. **Define Output Parameter:**

- forecasted_moisture: The forecasted moisture percentages for the entire day, with shape (batch_size, output_sequence_length).

3. **Define Model (SAN_Transformer):**

- Initialize the model with input parameters: input_size, output_size, num_layers, num_heads, and dropout.
- Create the encoder as a TransformerEncoder with num_layers of TransformerEncoderLayer instances, each with input_size and num_heads.
- Create the decoder as a linear layer that takes the encoded representations and maps them to the output size.
- In the forward method:

  - Concatenate the input_sequences and initial_moisture to form the combined input.
  - Pass the combined input through the encoder to obtain encoded representations.
  - Take the mean of the encoded representations along the sequence dimension.
  - Pass the mean representation through the decoder to generate the output.

4. **Define Training Function:**

- Input: model, train_loader, val_loader, epochs, learning_rate, and a device.
- Move the model to the specified device.
- Initialize the loss function as MSELoss.
- Initialize the optimizer as Adam with the model parameters and the specified learning rate.
- For each epoch:

    - Initialize train_loss and val_loss.
    - Training Loop:

        - Set the model to train mode.
        - For each batch of input_sequences, initial_moisture, and targets in the train_loader:

            - Move the inputs and targets to the specified device.
            - Zero out the gradients.
            - Compute the model outputs using model(input_sequences, initial_moisture).
            - Calculate the loss between the outputs and targets using the loss function.
            - Backpropagate the loss.
            - Update the model parameters using the optimizer.
            - Accumulate the train_loss.

    - Validation Loop:

        - Set the model to evaluation mode.

        - With no gradient computation:

            - For each batch of input_sequences, initial_moisture, and targets in the val_loader:

                - Move the inputs and targets to the specified device.
                - Compute the model outputs using model(input_sequences, initial_moisture).
                - Calculate the loss between the outputs and targets using the loss function.
                - Accumulate the val_loss.

    - Compute the average train_loss and val_loss.
    - Print the epoch, train_loss, and val_loss.

- Return the trained model.

5. **Example Usage:**

- Define the required parameters: input_size, output_size, sequence_length, output_sequence _length, num_layers, num_heads, learning_rate, epochs, and device.
- Assuming train_loader and val_loader are available, providing input_sequences, initial_moisture, and targets.
- Initialize the model.
- Call the train function with the model, data loaders, epochs, learning rate, and device.
- Obtain the trained model.

6. **Inference:**

- Use the trained model for inference by passing input_sequences and initial_moisture to obtain forecasted_moisture.

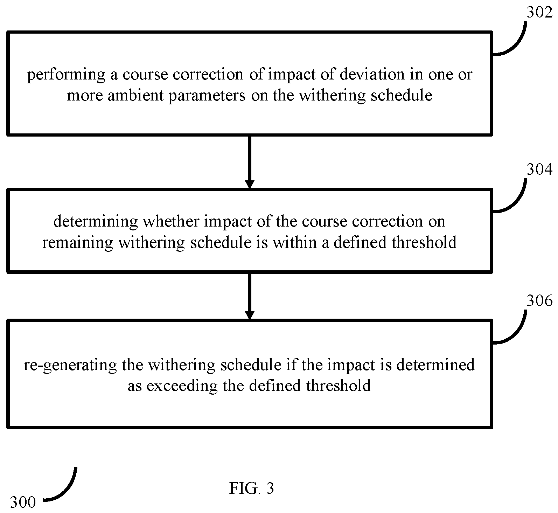

In an embodiment, the predicted withering schedule is fine-tuned, via the one or more hardware processors 102. Steps involved in the process of fine-tuning the predicted withering schedule are depicted in method 300 in FIG. 3, and are explained hereafter. At step 302 of the method 300, the system 100 performs a course correction of impact of deviation in one or more ambient parameters on the prediction of the withering schedule. Further, at step 304 of the method 300, the system 100 determines whether impact of the course correction on remaining withering schedule is within a defined threshold. Further, at step 306 of the method 300, the system 100 re-schedules a latest withering schedule if the impact is determined as exceeding the defined threshold.

In an embodiment, the system 100 optimizes the withering schedule based on a minimum number (if any) of checks to be performed during a cycle for sampling the tea leaves. Here, current temperature (t), current relative humidity (H) data is coming from respective sensors at regular intervals I, which is subset of the T interval. Current timestamp is processed further using Sigmoid function (F) as:

$$F(t_{-1}, t_0, t_{+1}) = \begin{cases} t_{+1}, if\, |t_{-1} - t_0| \geq nT, \\ t_{-1}, if\, |t_{-1} - t_0| < nT, \end{cases}$$

where,

$t_{-1}$ is previous time when last sampling was done according to predicted datetime of the scheduler
$t_{+1}$ is next time when next sampling is supposed to happen according to the scheduler $t_0$ represents current time of sampling
$T$ is time gap between two timestamp of sample reading, which is decided on the basis of historical data collection
$nT$ represents a threshold value, which is $n$%of $T$

The above expression is explained as below:

The function $F$ takes three arguments $t_{-1}, t_0, t_{+1}$, and then calculates absolute difference between $t_{-1}$ and $t_0$. If this difference is greater than or equal to $nT$, then the function returns $t_{+1}$. Otherwise the function returns $t_{-1}$. The function thus implements a switch between the previous sampling time and the current time. If the difference is large enough (determined in terms of the threshold), it indicates that the prediction by the scheduler is significantly off, hence the system 100 moves on to next scheduled sampling time, else sticks with the previous sampling time.

The sigmoid function converts any time into nearby predicted timestamp of Scheduler as per its definition. Now, at this current converted timestamp, the current room temperature and relative humidity at I interval will be compared with predicted room temperature and relative humidity at T interval which is already there from scheduler module at that same timestamp. This comparison is done as below:

ABSD_t = **Absolute difference between current and predicted temperature** = **|C_t - P_t|**
ABSD_H = **Absolute difference between current and predicted relative humidity = |C_H - P_H|**

The Weather Decision Block is running at I interval for the impact correction of extreme deviations in ambient parameters (t and H) which includes below mentioned methods and systems:

**1. W** : A method to generate a score (Comfort Zone Score) based on the ABSD_t and ABSD_H values at I intervals. Based on this score, it also generate rewards as feedback for another modules.

**Input** :

- ABSD_t at I intervals
- ABSD_H at I intervals
- Airflow rate (A) (Rate at which blower or fan used for drying out the tea leaves in close withering condition; **Default Airflow rate :** 0.5 m³/min per kg )

**Output:**

- Comfort Zone Score (CZS)
- Reward value (Range : -∞ to +∞)

Comfort zone range:

- For temperature: **0 < ABSD_t <= 0.5°C**
- For relative humidity : **0 < ABSD_H <= 5%**

It is to be noted that the percentage values (for example, 5%) as given above or the values specified for other parameters elsewhere in the description, are example values, and are not intended to limit scope of embodiments disclosed here. The values may change for different scenarios. The term 'scenarios' in the context of the embodiments disclosed herein may be in terms of geographical location being serviced. For example, values of parameters such as relative humidity, moisture contents, and so on vary from one geographical location to another. So depending on the geographical location being serviced, the values of the percentage values and other parameters maybe selected.

Pseudocode for Comfort Zone Score (CZS) calculation:

$$while(\ C\_time <= T\_time\ ):$$
$$if\ (ABSD\_t <= 0.5\ \&\&\ ABSD\_H <= 5):$$
$$CZS = 1$$
$$elif\ (ABSD\_t >= 0.5\ \&\&\ ABSD\_H >= 5):$$
$$CZS = 0$$
$$elif\ (ABSD\_t >= 0.5\ \&\&\ ABSD\_H <= 5):$$
$$CZS = 0$$
$$elif\ (ABSD\_t <=.5\ \&\&\ ABSD\_H >= 5):$$
$$CZS = 0$$
$$C\_time = C\_time + I\ interval$$

Rewards calculation:

Input:

- $x_A$ = Current airflow rate (0 to 3 m$^3$/min per kg)
- $x_t$ = ABSD_t (0 to $\infty$ )°C
- **$x_H$ = ABSD_H (0 to 100)%**

Output:

Reward value as per definition is obtained as output, and is represented as:

$$R(x) = F(x_a) + F(x_t) + F(x_h)$$

where,

$R(x)$ is a cumulative reward function that individually calculates rewards based on airflow $F(x_a)$, temperature $F(x_t)$, and relative humidity $F(x_h)$, where $x_a$, $x_t$, $x_h$ are real numbers.

$ForComfortZoneScore(CZS = 0)$,

$$F(x_a) = \begin{cases} -2(0.25 - x_a) if\ x_a < 0.25 \\ 0\ if\ 0.25 \le x_a \le 2.75 \\ -2(x_a - 2.75) if\ x_a > 2.75 \end{cases}$$

$$F(x_t) = \begin{cases} -4(x_t - 0.5) \, if \, x_t > 0.5 \\ 0 \, if \, x_t \leq 0.5 \end{cases}$$

$$F(x_h) = \begin{cases} -2(x_h - 5) \, if \, x_h > 5 \\ 0 \, if \, x_h \leq 5 \end{cases}$$

*ForComfortZoneScore(CZS = 1),*

$$F(x_a) = \begin{cases} \lfloor \frac{x_a - 0.25}{0.25} \rfloor \, if \, 0.25 \leq x_a \leq 1.0 \\ \lfloor \frac{2.75 - x_a}{0.25} \rfloor \, if \, 2.0 \leq x_a \leq 2.75 \\ 0 \end{cases}$$

$$F(x_t) = \lfloor \frac{5 - x_t}{0.1} \rfloor$$

$$F(x_h) = 0.5 \lfloor \frac{5 - x_h}{1} \rfloor$$

2. Weather State Representation: A method/function which does mapping from states (t, H) to actions (modify Airflow rate (A)) in a continuous action space.

Input:

- C_H and C_t at I interval

- P_H and P_t at T interval

- CZS

- Airflow rate (A)

- C_time (I interval time)

- T_time (Target Time: Predicted time at which target M% is scheduled to happen from scheduler)

Output: Airflow rate

Pseudocode for Weather State Representation:

*while( C_time <= T_time):*

*if C_time<= 2\*(T intervals) :*

*if (ABSD_t <= 0.5 & ABSD_H <= 5):*

*Maintain current airflow rate*

*elif (ABSD_t >= 0.5 & ABSD_H >= 5):*

*Use weather agent to adjust airflow rate to bring the parameter back within the range*

*elif (ABSD_t >= 0.5 & ABSD_H <= 5):*

*Use weather agent to adjust airflow rate to bring the parameter back within the range*

*elif (ABSD_t <= 0.5 & ABSD_H >= 5):*

*Use weather agent to adjust airflow rate to bring the parameter back within the range*

*else:*

*//If fails after multiple attempts at T interval*

*Reset Forcasting model with current data and re-predict target time.*

*Adjust airflow rate based on new prediction if necessary.*

*C_time = C_time + I interval*

*// Target time reached, shutdown process*

*SHUTDOWN_PROCESS()*

3. RL Agent : An Actor-Critic based deep neural networks which works on the principle of Reinforcement Learning is used.

Input :

- Rewards (goes into Critics network)
- CZS (goes into Actor network)
- Range of airflow between '0' and '3' $m^3$/min per kg (goes into Actor network)

Output:

- Rate of change of Airflow
- Airflow rate

Exit condition for Weather Decision Block:

- When C_time > T_time
- Course correction due to ambient parameters deviation runs atmost 2*(T interval) time from the C_time.

If after 2*(T interval) time, the deviations in ambient parameters still not corrected, the user is prompted to check current M% (C_M%) value.

- S_time (Start time)
- C_time (current time)
- T_time (Target Time (calculate as per predicted series for the day))
- PT_time = Predicted Target Time (time to reach the target M% from start of withering or after reset of Scheduler Rectifier)
- CT_time = Current Target time

NOTE:

ABSD = Absolute Difference

C_time = Current time

PT_time = Predicted Target time

C_t = Current Temperature

P_t = Predicted temperature

C_H = Current Relative humidity

P_H = Predicted Relative humidity

C_M% = Current Moisture %

P_M% = Predicted Moisture%

Steps for course correction mechanism are given below:

1. Check current moisture % (C_M%) and set the Target moisture % (T_M%):

- A user input with respect to T_M% value is received, which is based on the C_M% value

2. Determine Predicted Target time (PT_time):

- PT_time value is obtained from predicted timeseries based on P_M%, P_H, P_t.
- PT_time = |T_time - S_time|

3. Weather Decision block start running at I interval:

i Determining absolute difference values of relative humidity (represented as ABSD_H) and temperature (represented as ABSD_t) from respective sensors and predicted timeseries data.
ii A weather module W (which may be part of the system 100 in implementation, not shown) takes ABSD_t, ABSD_H, and default airflow rate as inputs and calculates Comfort Zone Score (CZS) and gives CZS as output.
iii RL Agent takes the CZS value and default initial ambient parameters and airflow rate as input and gives update on a weather state data generated by a weather state representation module in an example implementation of the system 100 (not shown).
iv Further, at any interval I, based on the calculated values, modification or change in airflow rate is obtained as per a current state.
v Rewards are calculated in the weather module W once RL agent makes decision based on CZS, airflow, current temperature, and current relative humidity values.
vi These rewards at I interval are stored in RL agent for further computation.

4. If step 3 fails after course correction for 2T interval or C_time == T_time (Check Exit conditions for Weather Decision Block), go to step 5.

5. Check C_M% from moisture % estimation model.

6. Determine CT_time from new predicted timeseries based on C_M%.

- CT_time = |T_time - C_time|

7. Calculations for Time Decision Block:

i Determine new Predicted Target Time (based on new predicted timeseries) : n_PT_time = |CT_time - C_time|
ii Calculate Time Threshold:

- Time Threshold = +- 5% of n_PT_time
- Time Threshold Lower value (LT)= PT_time - Time Threshold
- Time Threshold Upper value (UT)= PT_time + Time Threshold
- Time Threshold Range = LT to UT

8. Time Threshold Test:

- If LT <= CT_time <= UT:
  Within range means trigger Weather Decision Block
- else:
  Outside range means retrain Forecasting model with current data (C_M%, C_H, C_t)

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of withering schedule prediction of tea leaves. The embodiment, thus provides a mechanism for withering schedule prediction of tea leaves based on a moisture percentage predicted using a spectral analysis. Moreover, the embodiments herein further provide a mechanism for fine-tuning of the predicted withering schedule.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:

receiving (202), via one or more hardware processors, a) a plurality of captured images of a plurality of tea leaves, and b) historical data on cycle-wise withering details of the plurality of tea leaves from a plurality of sources, as input, wherein the historical data is with respect to a plurality of parameters comprising moisture percentage present in the tea leaves at a plurality of time stamps, and associated room temperature and relative humidity;
preprocessing (204) the input data, via the one or more hardware processors, to generate a pre-processed data;
estimating (206), by processing the pre-processed data using a trained moisture percentage estimation model via the one or more hardware processors, a moisture percentage in the plurality of tea leaves, for a selected time stamp; and
generating (208), by a trained time series forecasting model via the one or more hardware processors, a withering schedule for the plurality of tea leaves, based on a) the estimated moisture percentage, b) current temperature value, c) current relative humidity value, and d) a current timestamp.

2. The processor implemented method of claim 1, wherein the generated withering schedule is fine-tuned, via the one or more hardware processors, wherein the fine-tuning comprising:

performing (302) a course correction of impact of deviation in one or more ambient parameters on the withering schedule;
determining (304) whether impact of the course correction on remaining withering schedule is within a defined threshold; and
regenerating (306) the withering schedule if the impact is determined as exceeding the defined threshold.

3. The processor implemented method of claim 1, wherein the moisture percentage estimation model is trained to estimate the moisture percentage, comprising:

receiving (402) a plurality of spectral images of a plurality of reference tea leaves captured using a spectral camera device;
preprocessing (404) the received plurality of spectral images of the plurality of reference tea leaves to generate a preprocessed spectral data;
extracting (406) a foreground data from the preprocessed spectral data, wherein the foreground data comprises of a plurality of target areas of the plurality of reference tea leaves in the plurality of spectral images;
transforming (408) the foreground data of each of the plurality of reference tea leaves to an image matrix;
extracting (410) one or more bounding boxes from the image matrix using a bounding box classifier;
estimating (412) mean of pixel values associated with each of the plurality of reference tea leaves, for each of a plurality of bands in the preprocessed spectral data, by overlaying each of the one or more bounding boxes on the spectral image of each of the plurality of reference tea leaves;
mapping (414) the mean of pixels values with a moisture percentage;
and
training (416) the moisture percentage estimation model with the mean of pixels values and the mapped moisture percentage, to generate the trained moisture percentage estimation model.

4. A system (100), comprising:

one or more hardware processors (102);
a communication interface (112); and
a memory (104) storing a plurality of instructions, wherein the plurality of instructions cause the one or more hardware processors to:

receive a) a plurality of captured images of a plurality of tea leaves, and b) historical data on cycle-wise withering details of the plurality of tea leaves from a plurality of sources, as input, wherein the historical data is with respect to a plurality of parameters comprising moisture percentage present in the tea leaves at a plurality of time stamps, and associated room temperature and relative humidity;
preprocess the input data to generate a pre-processed data;
estimate, by processing the pre-processed data using a trained moisture percentage estimation model, a moisture percentage in the plurality of tea leaves, for a selected time stamp; and
generate, by a trained time series forecasting model, a withering schedule for the plurality of tea leaves, based on a) the estimated moisture percentage, b) current temperature value, c) current relative humidity value, and d) a current timestamp.

5. The system of claim 4, wherein the one or more hardware processors are configured to fine-tune the generated withering schedule, by:

performing a course correction of impact of deviation in one or more ambient parameters on the withering schedule;
determining whether impact of the course correction on remaining withering schedule is within a defined threshold; and
regenerating the withering schedule if the impact is determined as exceeding the defined threshold.

6. The system of claim 4, wherein the one or more hardware processors are configured to train the moisture percentage estimation model to estimate the moisture percentage, by:

receiving a plurality of spectral images of a plurality of reference tea leaves captured using a spectral camera device;
preprocessing the received plurality of spectral images of the plurality of reference tea leaves to generate a preprocessed spectral data;
extracting a foreground data from the preprocessed spectral data, wherein the foreground data comprises of a plurality of target areas of the plurality of reference tea leaves in the plurality of spectral images;
transforming the foreground data of each of the plurality of reference tea leaves to an image matrix;
extracting one or more bounding boxes from the image matrix using a bounding box classifier;
estimating mean of pixel values associated with each of the plurality of reference tea leaves, for each of a plurality of bands in the preprocessed spectral data, by overlaying each of the one or more bounding boxes on the spectral image of each of the plurality of reference tea leaves;
mapping the mean of pixels values with a moisture percentage; and
training the moisture percentage estimation model with the mean of pixels values and the mapped moisture percentage, to generate the trained moisture percentage estimation model.

7. One or more non-transitory machine-readable information storage mediums comprising one or more instructions which when executed by one or more hardware processors cause:

receiving , a) a plurality of captured images of a plurality of tea leaves, and b) historical data on cycle-wise withering details of the plurality of tea leaves from a plurality of sources, as input, wherein the historical data is with respect to a plurality of parameters comprising moisture percentage present in the tea leaves at a plurality of time stamps, and associated room temperature and relative humidity;
preprocessing the input data, via the one or more hardware processors, to generate a pre-processed data;
estimating , by processing the pre-processed data using a trained moisture percentage estimation model via the one or more hardware processors, a moisture percentage in the plurality of tea leaves, for a selected time stamp; and
generating , by a trained time series forecasting model via the one or more hardware processors, a withering schedule for the plurality of tea leaves, based on a) the estimated moisture percentage, b) current temperature value, c) current relative humidity value, and d) a current timestamp.

8. The one or more non-transitory machine-readable information storage mediums of claim 7, wherein the one or more instructions which when executed by the one or more hardware processors cause:

performing a course correction of impact of deviation in one or more ambient parameters on the withering schedule;
determining whether impact of the course correction on remaining withering schedule is within a defined threshold; and
regenerating the withering schedule if the impact is determined as exceeding the defined threshold.

9. The one or more non-transitory machine-readable information storage mediums of claim 7, wherein the one or more instructions which when executed by the one or more hardware processors cause:

receiving a plurality of spectral images of a plurality of reference tea leaves captured using a spectral camera device;
preprocessing the received plurality of spectral images of the plurality of reference tea leaves to generate a preprocessed spectral data;

extracting a foreground data from the preprocessed spectral data, wherein the foreground data comprises of a plurality of target areas of the plurality of reference tea leaves in the plurality of spectral images;

transforming the foreground data of each of the plurality of reference tea leaves to an image matrix;

extracting one or more bounding boxes from the image matrix using a bounding box classifier;

estimating mean of pixel values associated with each of the plurality of reference tea leaves, for each of a plurality of bands in the preprocessed spectral data, by overlaying each of the one or more bounding boxes on the spectral image of each of the plurality of reference tea leaves;

mapping the mean of pixels values with a moisture percentage; and

training the moisture percentage estimation model with the mean of pixels values and the mapped moisture percentage, to generate the trained moisture percentage estimation model.

**Patentansprüche**

1. Prozessorimplementiertes Verfahren, umfassend:

   Empfangen (202), über einen oder mehrere Hardwareprozessoren, a) einer Mehrzahl von aufgenommenen Bildern einer Mehrzahl von Teeblättern und b) historischer Daten über zyklusweise mitlaufende Details der Mehrzahl von Teeblättern von einer Mehrzahl von Quellen als Eingabe, wobei die historischen Daten in Bezug auf eine Mehrzahl von Parametern stehen, die den in den Teeblättern vorhandenen Feuchtigkeitsanteil bei einer Mehrzahl von Zeitstempeln und die zugehörige Raumtemperatur und relative Feuchtigkeit umfassen;

   Vorverarbeiten (204) der Eingabedaten über den einen oder die mehreren Hardwareprozessoren, um vorverarbeitete Daten zu erzeugen;

   Schätzen (206), durch Verarbeiten der vorverarbeiteten Daten unter Verwendung eines trainierten Feuchtigkeitsanteil-Schätzmodells über den einen oder die mehreren Hardwareprozessoren, eines Feuchtigkeitsanteils in der Mehrzahl von Teeblättern für einen ausgewählten Zeitstempel; und

   Erzeugen (208), durch ein trainiertes Zeitreihen-Vorhersagemodell über den einen oder die mehreren Hardwareprozessoren, eines mitlaufenden Zeitplans für die Mehrzahl von Teeblättern, basierend auf a) dem geschätzten Feuchtigkeitsanteil, b) dem aktuellen Temperaturwert, c) dem aktuellen relativen Feuchtigkeitswert und d) einem aktuellen Zeitstempel.

2. Prozessorimplementiertes Verfahren nach Anspruch 1, wobei der erzeugte mitlaufende Zeitplan über den einen oder die mehreren Hardwareprozessoren feinabgestimmt wird, wobei das Feinabstimmen umfasst:

   Durchführen (302) einer Verlaufskorrektur der Auswirkung der Abweichung in einem oder mehreren Umgebungsparametern auf den mitlaufenden Zeitplan;

   Bestimmen (304), ob die Auswirkung der Verlaufskorrektur auf den verbleibenden mitlaufenden Zeitplan innerhalb eines definierten Schwellenwerts liegt; und

   Regenerieren (306) des mitlaufenden Zeitplans, wenn bestimmt wird, dass die Auswirkung den definierten Schwellenwert überschreitet.

3. Prozessorimplementiertes Verfahren nach Anspruch 1, wobei das Feuchtigkeitsanteil-Schätzmodell trainiert wird, um den Feuchtigkeitsanteil zu schätzen, umfassend:

   Empfangen (402) einer Mehrzahl von Spektralbildern einer Mehrzahl von Referenzteeblättern, die unter Verwendung einer Spektralkameravorrichtung aufgenommen wurden;

   Vorverarbeiten (404) der empfangenen Mehrzahl von Spektralbildern der Mehrzahl von Referenzteeblättern, um vorverarbeitete Spektraldaten zu erzeugen;

   Extrahieren (406) von Vordergrunddaten aus den vorverarbeiteten Spektraldaten, wobei die Vordergrunddaten eine Mehrzahl von Zielbereichen der Mehrzahl von Referenzteeblättern in der Mehrzahl von Spektralbildern umfassen;

   Transformieren (408) der Vordergrunddaten jedes der Mehrzahl von Referenzteeblättern in eine Bildmatrix;

   Extrahieren (410) eines oder mehrerer Begrenzungskästchen aus der Bildmatrix unter Verwendung eines Begrenzungskästchen-Klassifikators;

   Schätzen (412) eines Mittelwerts von Pixelwerten, die jedem der Mehrzahl von Referenzteeblättern zugeordnet sind, für jedes einer Mehrzahl von Bändern in den vorverarbeiteten Spektraldaten durch Überlagern jedes des einen oder der mehreren Begrenzungskästchen auf dem Spektralbild jedes der Mehrzahl von Referenzteeblättern;

Abbilden (414) des Mittelwerts von Pixelwerten auf einen Feuchtigkeitsprozentsatz; und

Trainieren (416) des Feuchtigkeitsanteil-Schätzmodells mit dem Mittelwert von Pixelwerten und dem abgebildeten Feuchtigkeitsprozentsatz, um das trainierte Feuchtigkeitsanteil-Schätzmodell zu erzeugen.

4. System (100), umfassend:

einen oder mehrere Hardwareprozessoren (102);

eine Kommunikationsschnittstelle (112); und

einen Speicher (104), der eine Mehrzahl von Anweisungen speichert, wobei die Mehrzahl von Anweisungen den einen oder die mehreren Hardwareprozessoren zu Folgendem veranlasst:

Empfangen a) einer Mehrzahl von aufgenommenen Bildern einer Mehrzahl von Teeblättern und b) historischer Daten über zyklusweise mitlaufende Details der Mehrzahl von Teeblättern von einer Mehrzahl von Quellen als Eingabe, wobei die historischen Daten in Bezug auf eine Mehrzahl von Parametern stehen, die den in den Teeblättern vorhandenen Feuchtigkeitsanteil bei einer Mehrzahl von Zeitstempeln und die zugehörige Raumtemperatur und relative Feuchtigkeit umfassen;

Vorverarbeiten der Eingabedaten, um vorverarbeitete Daten zu erzeugen;

Schätzen, durch Verarbeiten der vorverarbeiteten Daten unter Verwendung eines trainierten Feuchtigkeitsanteil-Schätzmodells, eines Feuchtigkeitsanteils in der Mehrzahl von Teeblättern für einen ausgewählten Zeitstempel; und

Erzeugen, durch ein trainiertes Zeitreihen-Vorhersagemodell, eines mitlaufenden Zeitplans für die Mehrzahl von Teeblättern, basierend auf a) dem geschätzten Feuchtigkeitsanteil, b) dem aktuellen Temperaturwert, c) dem aktuellen relativen Feuchtigkeitswert und d) einem aktuellen Zeitstempel.

5. System nach Anspruch 4, wobei der eine oder die mehreren Hardwareprozessoren konfiguriert sind, um den erzeugten mitlaufenden Zeitplan feinabzustimmen durch:

Durchführen einer Verlaufskorrektur der Auswirkung der Abweichung in einem oder mehreren Umgebungsparametern auf den mitlaufenden Zeitplan;

Bestimmen, ob die Auswirkung der Verlaufskorrektur auf den verbleibenden mitlaufenden Zeitplan innerhalb eines definierten Schwellenwerts liegt; und

Regenerieren des mitlaufenden Zeitplans, wenn bestimmt wird, dass die Auswirkung den definierten Schwellenwert überschreitet.

6. System nach Anspruch 4, wobei der eine oder die mehreren Hardwareprozessoren konfiguriert sind, um das Feuchtigkeitsanteil-Schätzmodell zu trainieren, um den Feuchtigkeitsanteil zu schätzen, durch:

Empfangen einer Mehrzahl von Spektralbildern einer Mehrzahl von Referenzteeblättern, die unter Verwendung einer Spektralkameravorrichtung aufgenommen wurden;

Vorverarbeiten der empfangenen Mehrzahl von Spektralbildern der Mehrzahl von Referenzteeblättern, um vorverarbeitete Spektraldaten zu erzeugen;

Extrahieren von Vordergrunddaten aus den vorverarbeiteten Spektraldaten, wobei die Vordergrunddaten eine Mehrzahl von Zielbereichen der Mehrzahl von Referenzteeblättern in der Mehrzahl von Spektralbildern umfassen;

Transformieren der Vordergrunddaten jedes der Mehrzahl von Referenzteeblättern in eine Bildmatrix;

Extrahieren eines oder mehrerer Begrenzungskästchen aus der Bildmatrix unter Verwendung eines Begrenzungskästchen-Klassifikators;

Schätzen eines Mittelwerts von Pixelwerten, die jedem der Mehrzahl von Referenzteeblättern zugeordnet sind, für jedes einer Mehrzahl von Bändern in den vorverarbeiteten Spektraldaten durch Überlagern jedes des einen oder der mehreren Begrenzungskästchen auf dem Spektralbild jedes der Mehrzahl von Referenzteeblättern;

Abbilden des Mittelwerts von Pixelwerten auf einen Feuchtigkeitsprozentsatz; und

Trainieren des Feuchtigkeitsanteil-Schätzmodells mit dem Mittelwert von Pixelwerten und dem abgebildeten Feuchtigkeitsprozentsatz, um das trainierte Feuchtigkeitsanteil-Schätzmodell zu erzeugen.

7. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes veranlassen:

Empfangen a) einer Mehrzahl von aufgenommenen Bildern einer Mehrzahl von Teeblättern und b) historischer Daten über zyklusweise mitlaufende Details der Mehrzahl von Teeblättern von einer Mehrzahl von Quellen als Eingabe, wobei die historischen Daten in Bezug auf eine Mehrzahl von Parametern stehen, die den in den Teeblättern vorhandenen Feuchtigkeitsanteil bei einer Mehrzahl von Zeitstempeln und die zugehörige Raumtemperatur und relative Feuchtigkeit umfassen;

Vorverarbeiten der Eingabedaten über den einen oder die mehreren Hardwareprozessoren, um vorverarbeitete Daten zu erzeugen;

Schätzen, durch Verarbeiten der vorverarbeiteten Daten unter Verwendung eines trainierten Feuchtigkeitsanteil-Schätzmodells über den einen oder die mehreren Hardwareprozessoren, eines Feuchtigkeitsanteils in der Mehrzahl von Teeblättern für einen ausgewählten Zeitstempel; und

Erzeugen, durch ein trainiertes Zeitreihen-Vorhersagemodell über den einen oder die mehreren Hardwareprozessoren, eines mitlaufenden Zeitplans für die Mehrzahl von Teeblättern, basierend auf a) dem geschätzten Feuchtigkeitsanteil, b) dem aktuellen Temperaturwert, c) dem aktuellen relativen Feuchtigkeitswert und d) einem aktuellen Zeitstempel.

8. Ein oder mehrere nichtflüchtige maschinenlesbare Informationsspeichermedien nach Anspruch 7, wobei die eine oder die mehreren Anweisungen, die bei Ausführung durch den einen oder die mehreren Hardwareprozessoren Folgendes veranlassen:

Durchführen einer Verlaufskorrektur der Auswirkung der Abweichung in einem oder mehreren Umgebungsparametern auf den mitlaufenden Zeitplan;

Bestimmen, ob die Auswirkung der Verlaufskorrektur auf den verbleibenden mitlaufenden Zeitplan innerhalb eines definierten Schwellenwerts liegt; und

Regenerieren des mitlaufenden Zeitplans, wenn bestimmt wird, dass die Auswirkung den definierten Schwellenwert überschreitet.

9. Ein oder mehrere nichtflüchtige maschinenlesbare Informationsspeichermedien nach Anspruch 7, wobei die eine oder die mehreren Anweisungen, die bei Ausführung durch den einen oder die mehreren Hardwareprozessoren Folgendes veranlassen:

Empfangen einer Mehrzahl von Spektralbildern einer Mehrzahl von Referenzteeblättern, die unter Verwendung einer Spektralkameravorrichtung aufgenommen wurden;

Vorverarbeiten der empfangenen Mehrzahl von Spektralbildern der Mehrzahl von Referenzteeblättern, um vorverarbeitete Spektraldaten zu erzeugen;

Extrahieren von Vordergrunddaten aus den vorverarbeiteten Spektraldaten, wobei die Vordergrunddaten eine Mehrzahl von Zielbereichen der Mehrzahl von Referenzteeblättern in der Mehrzahl von Spektralbildern umfassen;

Transformieren der Vordergrunddaten jedes der Mehrzahl von Referenzteeblättern in eine Bildmatrix;

Extrahieren eines oder mehrerer Begrenzungskästchen aus der Bildmatrix unter Verwendung eines Begrenzungskästchen-Klassifikators;

Schätzen eines Mittelwerts von Pixelwerten, die jedem der Mehrzahl von Referenzteeblättern zugeordnet sind, für jedes einer Mehrzahl von Bändern in den vorverarbeiteten Spektraldaten durch Überlagern jedes des einen oder der mehreren Begrenzungskästchen auf dem Spektralbild jedes der Mehrzahl von Referenzteeblättern;

Abbilden des Mittelwerts von Pixelwerten auf einen Feuchtigkeitsprozentsatz; und

Trainieren des Feuchtigkeitsanteil-Schätzmodells mit dem Mittelwert von Pixelwerten und dem abgebildeten Feuchtigkeitsprozentsatz, um das trainierte Feuchtigkeitsanteil-Schätzmodell zu erzeugen.

**Revendications**

1. Procédé mis en oeuvre par processeur, comprenant :

la réception (202), par l'intermédiaire d'un ou plusieurs processeurs matériels, a) d'une pluralité d'images capturées d'une pluralité de feuilles de thé, et b) de données historiques sur des détails de décroissance cyclique de la pluralité de feuilles de thé provenant d'une pluralité de sources, en tant qu'entrée, dans lequel les données historiques concernent une pluralité de paramètres comprenant un pourcentage d'humidité présent dans les feuilles de thé à une pluralité d'horodatages, et une température ambiante et une humidité relative associées ;

le prétraitement (204) des données d'entrée, par l'intermédiaire des un ou plusieurs processeurs matériels, pour générer des données prétraitées ;

l'estimation (206), par le traitement des données prétraitées à l'aide d'un modèle d'estimation de pourcentage d'humidité entraîné par l'intermédiaire des un ou plusieurs processeurs matériels, d'un pourcentage d'humidité dans la pluralité de feuilles de thé, pour un horodatage sélectionné ; et

la génération (208), par un modèle de prévision de série temporelle entraîné par l'intermédiaire des un ou plusieurs processeurs matériels, d'un calendrier de décroissance pour la pluralité de feuilles de thé, sur la base a) du pourcentage d'humidité estimé, b) d'une valeur de température actuelle, c) d'une valeur d'humidité relative actuelle, et d) d'un horodatage actuel.

2. Procédé mis en oeuvre par processeur selon la revendication 1, dans lequel le calendrier de décroissance généré est optimisé, par l'intermédiaire des un ou plusieurs processeurs matériels, dans lequel l'optimisation comprend :

l'exécution (302) d'une correction de trajectoire d'impact d'écart dans un ou plusieurs paramètres ambiants sur le calendrier de décroissance ;

la détermination (304) si l'impact de la correction de trajectoire sur le calendrier de décroissance restant est dans les limites d'un seuil défini ; et

la régénération (306) du calendrier de décroissance si l'impact est déterminé comme dépassant le seuil défini.

3. Procédé mis en oeuvre par processeur selon la revendication 1, dans lequel le modèle d'estimation de pourcentage d'humidité est entraîné pour estimer le pourcentage d'humidité, comprenant :

la réception (402) d'une pluralité d'images spectrales d'une pluralité de feuilles de thé de référence capturées à l'aide d'un dispositif de caméra spectrale ;

le prétraitement (404) de la pluralité reçue d'images spectrales de la pluralité de feuilles de thé de référence pour générer des données spectrales prétraitées ;

l'extraction (406) de données de premier plan à partir des données spectrales prétraitées, dans lequel les données de premier plan comprennent une pluralité de zones cibles de la pluralité de feuilles de thé de référence dans la pluralité d'images spectrales ;

la transformation (408) des données de premier plan de chacune de la pluralité de feuilles de thé de référence en une matrice d'image ;

l'extraction (410) d'une ou plusieurs boîtes de délimitation à partir de la matrice d'image à l'aide d'un classificateur de boîte de délimitation ;

l'estimation (412) d'une moyenne de valeurs de pixels associées à chacune de la pluralité de feuilles de thé de référence, pour chacune d'une pluralité de bandes dans les données spectrales prétraitées, par la superposition de chacune des une ou plusieurs boîtes de délimitation sur l'image spectrale de chacune de la pluralité de feuilles de thé de référence ;

le mappage (414) de la moyenne de valeurs de pixels avec un pourcentage d'humidité ; et

l'entraînement (416) du modèle d'estimation de pourcentage d'humidité avec la moyenne de valeurs de pixels et le pourcentage d'humidité mappé, pour générer le modèle d'estimation de pourcentage d'humidité entraîné.

4. Système (100), comprenant :

un ou plusieurs processeurs matériels (102) ;
une interface de communication (112) ; et
une mémoire (104) stockant une pluralité d'instructions, dans lequel la pluralité d'instructions amènent les un ou plusieurs processeurs matériels à :

recevoir a) une pluralité d'images capturées d'une pluralité de feuilles de thé, et b) des données historiques sur des détails de décroissance cyclique de la pluralité de feuilles de thé provenant d'une pluralité de sources, en tant qu'entrée, dans lequel les données historiques concernent une pluralité de paramètres comprenant un pourcentage d'humidité présent dans les feuilles de thé à une pluralité d'horodatages, et une température ambiante et une humidité relative associées ;

prétraiter les données d'entrée pour générer des données prétraitées ;

estimer, par le traitement des données prétraitées à l'aide d'un modèle d'estimation de pourcentage d'humidité entraîné, un pourcentage d'humidité dans la pluralité de feuilles de thé, pour un horodatage sélectionné ; et

générer, par un modèle de prévision de série temporelle entraîné, un calendrier de décroissance pour la pluralité de feuilles de thé, sur la base a) du pourcentage d'humidité estimé, b) d'une valeur de température actuelle, c) d'une valeur d'humidité relative actuelle, et d) d'un horodatage actuel.

**5.** Système selon la revendication 4, dans lequel les un ou plusieurs processeurs matériels sont configurés pour optimiser le calendrier de décroissance généré, par :

l'exécution d'une correction de trajectoire d'impact d'écart dans un ou plusieurs paramètres ambiants sur le calendrier de décroissance ; la détermination si l'impact de la correction de trajectoire sur le calendrier de décroissance restant est dans les limites d'un seuil défini ; et
la régénération du calendrier de décroissance si l'impact est déterminé comme dépassant le seuil défini.

**6.** Système selon la revendication 4, dans lequel les un ou plusieurs processeurs matériels sont configurés pour entraîner le modèle d'estimation de pourcentage d'humidité pour estimer le pourcentage d'humidité, par :

la réception d'une pluralité d'images spectrales d'une pluralité de feuilles de thé de référence capturées à l'aide d'un dispositif de caméra spectrale ;
le prétraitement de la pluralité reçue d'images spectrales de la pluralité de feuilles de thé de référence pour générer des données spectrales prétraitées ;
l'extraction de données de premier plan à partir des données spectrales prétraitées, dans lequel les données de premier plan comprennent une pluralité de zones cibles de la pluralité de feuilles de thé de référence dans la pluralité d'images spectrales ;
la transformation des données de premier plan de chacune de la pluralité de feuilles de thé de référence en une matrice d'image ;
l'extraction d'une ou plusieurs boîtes de délimitation à partir de la matrice d'image à l'aide d'un classificateur de boîte de délimitation l'estimation d'une moyenne de valeurs de pixels associées à chacune de la pluralité de feuilles de thé de référence, pour chacune d'une pluralité de bandes dans les données spectrales prétraitées, par la superposition de chacune des une ou plusieurs boîtes de délimitation sur l'image spectrale de chacune de la pluralité de feuilles de thé de référence ;
le mappage de la moyenne de valeurs de pixels avec un pourcentage d'humidité ; et
l'entraînement du modèle d'estimation de pourcentage d'humidité avec la moyenne de valeurs de pixels et le pourcentage d'humidité mappé, pour générer le modèle d'estimation de pourcentage d'humidité entraîné.

**7.** Un ou plusieurs supports de stockage d'informations lisibles par machine non transitoires comprenant une ou plusieurs instructions qui, lorsqu'elles sont exécutées par un ou plusieurs processeurs matériels, amènent :

la réception, a) d'une pluralité d'images capturées d'une pluralité de feuilles de thé, et b) de données historiques sur des détails de décroissance cyclique de la pluralité de feuilles de thé provenant d'une pluralité de sources, en tant qu'entrée, dans lequel les données historiques concernent une pluralité de paramètres comprenant un pourcentage d'humidité présent dans les feuilles de thé à une pluralité d'horodatages, et une température ambiante et une humidité relative associées ;
le prétraitement des données d'entrée, par l'intermédiaire des un ou plusieurs processeurs matériels, pour générer des données prétraitées ;
l'estimation, par le traitement des données prétraitées à l'aide d'un modèle d'estimation de pourcentage d'humidité entraîné par l'intermédiaire des un ou plusieurs processeurs matériels, d'un pourcentage d'humidité dans la pluralité de feuilles de thé, pour un horodatage sélectionné ; et
la génération, par un modèle de prévision de série temporelle entraîné par l'intermédiaire des un ou plusieurs processeurs matériels, d'un calendrier de décroissance pour la pluralité de feuilles de thé, sur la base a) du pourcentage d'humidité estimé, b) d'une valeur de température actuelle, c) d'une valeur d'humidité relative actuelle, et d) d'un horodatage actuel.

**8.** Les un ou plusieurs supports de stockage d'informations lisibles par machine non transitoires de la revendication 7, dans lesquels les une ou plusieurs instructions qui, lorsqu'elles sont exécutées par les un ou plusieurs processeurs matériels, amènent :

l'exécution d'une correction de trajectoire d'impact d'écart dans un ou plusieurs paramètres ambiants sur le calendrier de décroissance ; la détermination si l'impact de la correction de trajectoire sur le calendrier de décroissance restant est dans les limites d'un seuil défini ; et
la régénération du calendrier de décroissance si l'impact est déterminé comme dépassant le seuil défini.

**9.** Les un ou plusieurs supports de stockage d'informations lisibles par machine non transitoires de la revendication 7, dans lesquels les une ou plusieurs instructions qui, lorsqu'elles sont exécutées par les un ou plusieurs processeurs matériels, amènent :

la réception d'une pluralité d'images spectrales d'une pluralité de feuilles de thé de référence capturées à l'aide d'un dispositif de caméra spectrale ;

le prétraitement de la pluralité reçue d'images spectrales de la pluralité de feuilles de thé de référence pour générer des données spectrales prétraitées ;

l'extraction de données de premier plan à partir des données spectrales prétraitées, dans lequel les données de premier plan comprennent une pluralité de zones cibles de la pluralité de feuilles de thé de référence dans la pluralité d'images spectrales ;

la transformation des données de premier plan de chacune de la pluralité de feuilles de thé de référence en une matrice d'image ;

l'extraction d'une ou plusieurs boîtes de délimitation à partir de la matrice d'image à l'aide d'un classificateur de boîte de délimitation l'estimation d'une moyenne de valeurs de pixels associées à chacune de la pluralité de feuilles de thé de référence, pour chacune d'une pluralité de bandes dans les données spectrales prétraitées, par la superposition de chacune des une ou plusieurs boîtes de délimitation sur l'image spectrale de chacune de la pluralité de feuilles de thé de référence ;

le mappage de la moyenne de valeurs de pixels avec un pourcentage d'humidité ; et

l'entraînement du modèle d'estimation de pourcentage d'humidité avec la moyenne de valeurs de pixels et le pourcentage d'humidité mappé, pour générer le modèle d'estimation de pourcentage d'humidité entraîné.

100

108

MEMORY 104

MODULES 106

REPOSITORY 110

I/O INTERFACE
112

HARDWARE
PROCESSORS 102

FIG. 1

receiving, via one or more hardware processors, a) a plurality of captured images of a plurality of tea leaves, and b) historical data on cycle-wise withering details of the plurality of tea leaves from a plurality of sources, as input, wherein the historical data is with respect to a plurality of parameters comprising moisture percentage present in the tea leaves at a plurality of time stamps, and associated room temperature and relative humidity

202

preprocessing the input data, via the one or more hardware processors, to generate a pre-processed data

204

estimating, by processing the pre-processed data using a trained moisture percentage estimation model via the one or more hardware processors, a moisture percentage in the plurality of tea leaves, for a selected time stamp

206

generating, by a trained time series forecasting model via the one or more hardware processors, a withering schedule for the plurality of tea leaves, based on a) the estimated moisture percentage, b) current temperature value, c) relative humidity value, and d) a current timestamp

208

200

FIG. 2

302

performing a course correction of impact of deviation in one or more ambient parameters on the withering schedule

304

determining whether impact of the course correction on remaining withering schedule is within a defined threshold

306

re-generating the withering schedule if the impact is determined as exceeding the defined threshold

300

FIG. 3

402

receiving a plurality of spectral images of a plurality of reference tea leaves captured using a spectral camera device

404

preprocessing the received plurality of spectral images of the plurality of reference tea leaves to generate a preprocessed spectral data

406

extracting-a foreground data from the preprocessed spectral data, wherein the foreground data comprises of a plurality of target areas of the plurality of reference tea leaves in the plurality of spectral images

408

transforming the foreground data of each of the plurality of reference tea leaves to an image matrix

410

extracting one or more bounding boxes from the image matrix using a bounding box classifier

A

400

FIG. 4A

A

412

estimating mean of pixel values associated with each of the plurality of tea leaves, for each of a plurality of bands in the preprocessed spectral data, by overlaying each of the one or more bounding boxes on the spectral image of each of the plurality of reference tea leaves

414

mapping the mean of pixel values with a moisture percentage

416

training the moisture percentage estimation model with the mean of pixel values and the mapped moisture percentage, to generate the trained moisture percentage estimation model

400

FIG. 4B

# EP 4 625 365 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421024483

**Non-patent literature cited in the description**

- **DAS, N et al.** Prediction of moisture loss in withering process of tea manufacturing using artificial neural network. *IEEE Transactions on Instrumentation and Measurement*, January 2018, vol. 67 (1), 175-184